# EUROPÄISCHE PATENTSCHRIFT

(11) **EP 1 520 129 B1**
(45) Veröffentlichungstag und Bekanntmachung des Hinweises auf die Patenterteilung: **02.11.2006**
(21) Anmeldenummer: 03740316.9
(22) Anmeldetag: 24.06.2003
(51) Int. Cl.: F16K 3/24, E05F 3/12

(54) **SCHIEBERVENTIL**
SLIDE VALVE
DISTRIBUTEUR A TIROIR

(30) Priorität: 27.06.2002 DE 10228871
(43) Veröffentlichungstag der Anmeldung: 06.04.2005
(73) Patentinhaber: DORMA GmbH + Co. KG, 58256 Ennepetal (DE)
(72) Erfinder: SALUTZKI, Thomas, 58452 Witten (DE); BUSCH, Sven, 44139 Dortmund (DE)
(86) Internationale Anmeldenummer: PCT/EP2003/006618
(87) Internationale Veröffentlichungsnummer: WO 2004/003412

(56) Entgegenhaltungen:
- EP-A- 0 889 190
- AT-B- 219 450
- US-A- 1 339 665
- US-A- 1 412 138
- US-A- 3 125 121
- US-A- 3 761 052

## Beschreibung

Die Erfindung betrifft ein Schieberventil mit einem Ventilkörper und einem an dem Ventilkörper gelagerten Drosselkörper.

Solche Schieberventile sind im Stand der Technik, z. B. aus der DE 42 41 701 C1, hinlänglich bekannt. Damit bei solchen Schieberventilen eine gute Dichtigkeit gewährleistet werden kann, müssen der Drosselkörper und der Ventilsitz mit hoher Präzision gefertigt werden. Dies ist aufwendig und daher teuer.

In der US 1,339,665 wird ein Ventil mit einem Drosselkörper beschrieben, der zu einem Teil aus einem geschlitzten hohlen Zylinder besteht. Auf der Unterseite des hohlen Zylinders ist ein zylindrischer, ebener Dichtkörper angeordnet, der sich bei geschlossenem Ventil dichtend auf den Ventilsitz legt.

Die US 3,125,121 zeigt ebenfalls ein Ventil mit einem kegeligen Drosselkörper. Oberhalb des Drosselkegels ist ein längsgeschlitzter hohler Zylinder angeordnet, der die seitliche Führung der Ventilspindel übernimmt. Die Dichtwirkung wird aber durch den kegeligen Drosselkörper erzielt.

Die US 1,412,138 beschreibt ein Ventil mit einem zylindrischen Ventilkörper, der von einem geschlitzten und als Hohlzylinder ausgebildeten Stopfen geführt wird. Die Dichtwirkung übernimmt hierbei der zylindrische Ventilkörper, der mit seinem unteren Rand im geschlossenen Zustand auf dem Ventilsitz aufliegt.

Es ist somit Aufgabe der vorliegenden Erfindung, ein Schieberventil bereitzustellen, das auch bei einem geringeren Fertigungsaufwand eine gute Dichtigkeit gewährleistet und deshalb preiswerter hergestellt werden kann.

Diese Aufgabe wird durch die im Patentanspruch 1 angegebenen Merkmale gelöst. Vorteilhafte Weiterbildungen ergeben sich aus den Unteransprüchen.

Ein zweiteiliges Schieberventil besteht dabei aus Metall und der Drosselkörper aus Kunststoff. Die Form des Drosselkörpers ist dabei zylindrisch und steckt in einer Führungsbohrung. In Abhängigkeit von der eingestellten Position - Herausdrehen bzw. Hineindrehen des Schieberventiles -, wird eine Querbohrung, durch die ein Volumenstrom hindurch geht, ganz oder nur teilweise verschlossen.

Das erfindungsgemäße Schieberventil kann bei erheblich preiswerterer Herstellung eine gute Dichtigkeit gewährleisten. Denn der Drosselkörper kann sich aufgrund seines Schlitzes in Umfangsrichtung elastisch verformen und sich so dichtend an den Ventilsitz anlegen, so dass an die Toleranzen des Drosselkörpers keine allzu hohen Anforderungen gestellt werden müssen. Infolge der hohen Elastizität des Drosselkörpers kann auch ein Verkanten im Ventilsitz verhindert werden, so dass das erfindungsgemäße Schieberventil neben geringeren Fertigungskosten auch eine verbesserte Funktionalität mit sich bringt. Dabei ist der Drosselkörper im Wesentlichen als geschlitzter Hohlzylinder ausgebildet. Eine solche Geometrie ist einfach herzustellen und stellt auch an den Ventilsitz keine erhöhten Forderungen bezüglich seiner Formgebung, so dass durch diese Maßnahme insgesamt zu einer preiswerteren Herstellung beigetragen wird.

Damit eine gute Dichtwirkung erzielt werden kann, besteht der Drosselkörper aus einem elastischen Material. Hierdurch wird eine dichte Anlage des Drosselkörpers an den Ventilsitz gewährleistet.

Der Drosselkörper weist ein Übermaß gegenüber einem den Drosselkörper aufnehmenden Ventilsitz auf. Hierdurch wird in einfacher Weise erreicht, dass der in den Ventilsitz eingesetzte Drosselkörper zwangsweise verformt wird und somit dichtend an dem Ventilsitz anliegt.

Eine besonders dichte und passgenaue Anlage des Drosselkörpers in dem Ventilsitz wird erreicht, wenn der Drosselkörper von dem Ventilsitz derart zusammendrückbar ist, dass im eingesetzten Zustand der Schlitz des Drosselkörpers vollständig oder nahezu vollständig geschlossen ist.

Damit der Drosselkörper leicht in den Ventilsitz eingeführt werden kann, ist erfindungsgemäß vorgesehen, dass der Ventilsitz auf seiner zum Ventilkörper gerichteten Seite mit einer Fase versehen ist.

Um den Drosselkörper in einfacher Weise an dem Ventilkörper zu befestigen, ist gemäß einer vorteilhaften Ausgestaltung der Drosselkörper über eine Schnappverbindung an dem Ventilkörper gehalten. Eine solche Schnappverbindung ist einfach herzustellen, gewährleistet aber trotzdem einen sicheren Zusammenhalt von Drosselkörper und Ventilkörper bei zusätzlich hoher Haltekraft.

Damit die Schnappverbindung leicht zusammenzufügen ist, ist gemäß einer vorteilhaften Weiterbildung vorgesehen, dass der Ventilkörper an seinem zum Drosselkörper gerichteten Ende einen kegelstumpfförmigen Ansatz aufweist.

Der kegelstumpfförmige Ansatz ist vorzugsweise mit einer Hinterschneidung versehen. Dies ermöglicht eine sichere Lagerung des Drosselkörpers am Ventilkörper.

Um mit der Hinterschneidung eine sichere Verbindung eingehen zu können, ist der Drosselkörper gemäß einer bevorzugten Ausgestaltung an seinem zum Ventilkörper weisenden Ende mit einer nach innen gerichteten Ringwulst versehen, die in die Hinterschneidung eingreift. Hierdurch kann eine spielfreie Lagerung des Drosselkörpers am Ventilkörper sichergestellt werden.

Gemäß einer vorteilhaften Weiterbildung erstreckt sich der Schlitz im Drosselkörper auch durch den Ringwulst. Somit kann einerseits der kegelstumpfförmige Ansatz am Ventilkörper den geschlitzten Drosselkörper beim Zusammenbau leicht aufweiten, bis der Ringwulst in die Hinterschneidung zu liegen kommt und andererseits kann eine gute Verformbarkeit des Drosselkörpers im Ventilsitz sichergestellt werden.

Weitere Merkmale und Vorteile der Erfindung ergeben sich aus der nachfolgenden Beschreibung eines bevorzugten Ausführungsbeispieles.

Es zeigen:
- Figur 1:: Eine Ansicht des erfindungsgemäßen Schieberventiles mit Ventilkörper und Drosselkörper,
- Figur 2:: einen Schnitt durch den erfindungsgemäßen Drosselkörper,
- Figur 3:: einen Schnitt durch den unteren Teil des Ventilkörpers mit angesetztem Drosselkörper und
- Figur 4:: einen Schnitt durch das in ein Gehäuse eingesetztes Schieberventil.

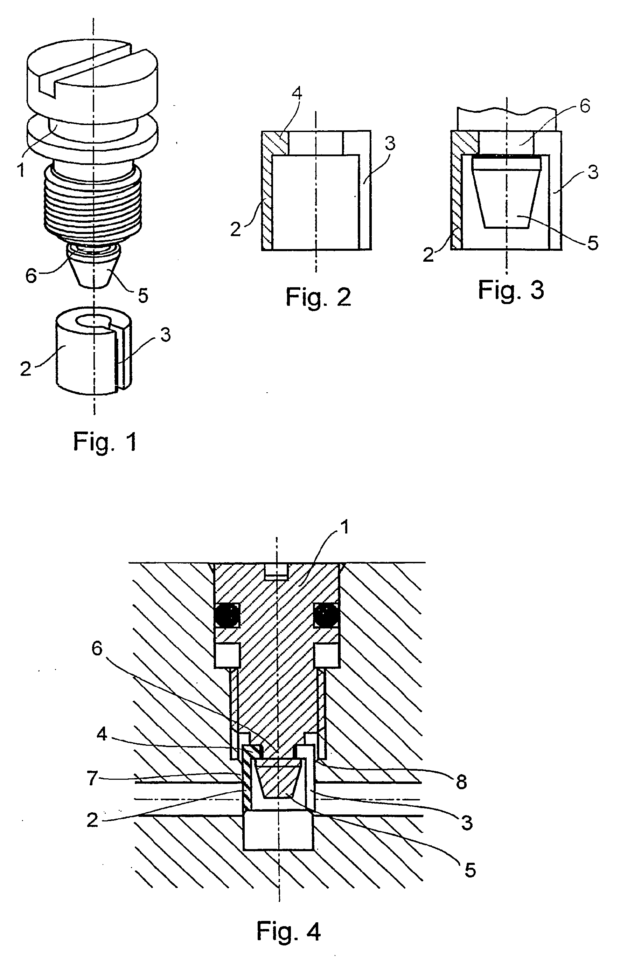

In den Figuren 1 bis 4 ist ein erfindungsgemäßes Schieberventil an einem bevorzugten Ausführungsbeispiel dargestellt und erläutert.

Figur 1 zeigt das erfindungsgemäße Schieberventil in einem zerlegten Zustand. Zur Verstellung des Schieberventiles ist ein Gewinde vorhanden, das mit einem Innengewinde innerhalb einer Führungsbohrung zusammenwirkt. An einem nicht näher bezeichneten Kopf zur Verstellung des Schieberventiles befindet sich eine radial umlaufende Dichtung. Man erkennt einen Ventilkörper 1 und einen von dem Ventilkörper 1 getrennten, im Wesentlichen hohlzylinderförmigen Drosselkörper 2. Der Drosselkörper 2 ist mit einem in seiner Axialrichtung verlaufenden Schlitz 3 versehen, der sich über die gesamte Höhe des Drosselkörpers 2 erstreckt. An seinem zum Ventilkörper 1 weisenden Ende ist der Drosselkörper 2 mit einer nach innen weisenden Ringwulst 4 versehen (siehe Figur 2). Diese Ringwulst 4 ist ebenfalls geschlitzt. Es ist jedoch auch möglich, diese Ringwulst 4 nicht mit dem Schlitz 3 zu versehen.

Der Ventilkörper 1 ist an seinem zum Drosselkörper 2 weisenden Ende mit einem kegelstumpfförmigen Ansatz 5 versehen, dessen dünneres Ende auf den Drosselkörper 2 gerichtet ist. Der kegelstumpfförmige Ansatz 5 ist an seinem dickeren Ende mit einer Hinterschneidung 6 versehen, in die der Ringwulst 4 des Drosselkörpers 2 eingreift, wenn der Drosselkörper 2 am Ventilkörper 1 festgelegt ist.

Der Drosselkörper 2 ist in einem Ventilsitz 7 hin und her beweglich gelagert. Damit der mit einem Übermaß gegenüber dem Ventilsitz 7 gefertigte Drosselkörper 2 leicht in den Ventilsitz 7 eingeschoben werden kann, ist der Ventilsitz 7 an seinem zum Drosselkörper 2 bzw. zum Ventilkörper 1 weisenden Ende mit einer Fase 8 versehen. Diese Fase 8 erleichtert auch die elastische Verformung des Drosselkörpers 2 beim Einsetzen in den Ventilsitz 7.

Die vorhergehende Beschreibung des Ausführungsbeispieles der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen. Ein solches Schieberventil kann für alle Einsatzgebiete, in denen Ventile benötigt werden, angewendet werden. Dieses gilt insbesondere für hydraulische Türschließer und Drehflügelantriebe.

Neben den Vorteilen einer leichten Montage, einer hohen Haltekraft der Schnappverbindungen und einer hohen Elastizität des Drosselkörpers 2, was eine gute Dichtigkeit und kein Verklemmen in der Führungsbohrung bedeutet, zeichnet sich das Schieberventil durch eine gute Temperaturstabilität aus. Die Temperaturstabilität wird um so größer, je kürzer die Drosselstrecke bzw. die Drosseispaltlänge ist.

## Patentansprüche

1. Schieberventil mit einem Ventilkörper und einem an dem Ventilkörper gelagerten, aus einem elastischen Material bestehenden Drosselkörper (2), der im Wesentlichen als geschlitzter Hohlzylinder ausgebildet ist, wobei der Schlitz (3) in Axialrichtung verlaufend angeordnet ist, und dass der Drosselkörper (2) ein Übermaß gegenüber einem den Drosselkörper (2) aufnehmenden Ventilsitz (7) aufweist, **dadurch gekennzeichnet, dass** der Drosselkörper (2) von dem Ventilsitz (7) derart zusammendrückbar ist, dass im eingesetzten Zustand der Schlitz (3) des Drosselkörpers (2) vollständig oder nahezu vollständig geschlossen ist, so dass eine Querbohrung, durch die ein Volumenstrom hindurch geht, ganz oder nur teilweise verschlossen wird.

2. Schieberventil nach Anspruch 1, **dadurch gekennzeichnet, dass** der Ventilsitz (7) auf seiner zum Ventilkörper (1) gerichteten Seite mit einer Fase (8) versehen ist.

3. Schieberventil nach Anspruch 1, **dadurch gekennzeichnet, dass** der Drosselkörper (2) über eine Schnappverbindung an dem Ventilkörper (1) gehalten ist.

4. Schieberventil nach Anspruch 1, **dadurch gekennzeichnet, dass** der Ventilkörper (1) an seinem zum Drosselkörper (2) gerichteten Ende einen kegelstumpfförmigen Ansatz (5) aufweist.

5. Schieberventil nach Anspruch 4, **dadurch gekennzeichnet, dass** der kegelstumpfförmige Ansatz (5) mit einer Hinterschneidung (6) versehen ist.

6. Schieberventil nach Anspruch 5, **dadurch gekennzeichnet, dass** der Drosselkörper (2) an seinem zum Ventilkörper (1) weisenden Ende mit einer nach innen gerichteten Ringwulst (4) versehen ist, die in die Hinterschneidung (6) eingreift.

7. Schieberventil nach Anspruch 6, **dadurch gekennzeichnet, dass** sich der Schlitz (3) im Drosselkörper (2) auch durch den Ringwulst (4) erstreckt.

## Claims

1. A slide valve having a valve body and a throttle body (2), which is supported at the valve body, consists of an elastic material and is substantially formed as a slotted hollow cylinder, the slot (3) extending in axial direction, and in that the throttle body (2) is oversized in relation to a valve seat (7) receiving the throttle body (2), **characterized in that** the throttle body (2) is compressible by the valve seat (7) such that, in the inserted condition, the slot (3) of the throttle body (2) is completely or almost completely closed, such that a transverse bore, through which a volume flow passes, will be closed off completely or just partially.

2. A slide valve according to claim 1, **characterized in that** the valve seat (7), on the side thereof oriented towards the valve body (1), is provided with a chamfer (8).

3. A slide valve according to claim 1, **characterized in that** the throttle body (2) is maintained at the valve body (1) by means of a snap-in connection.

4. A slide valve according to claim 1, **characterized in that** the valve body (1), at the end thereof oriented towards the throttle body (1), has a truncated projection (5).

5. A slide valve according to claim 4, **characterized in that** the truncated projection (5) is provided with an undercut (6).

6. A slide valve according to claim 5, **characterized in that** the throttle body (2), at the end thereof oriented towards the valve body (1), is provided with an annular collar (4) oriented towards the inside, which engages into the undercut (6).

7. A slide valve according to claim 6, **characterized in that** the slot (3) in the throttle body (2) likewise extends through the angular collar (4).

## Revendications

1. Soupape à coulisse ayant un corps de soupape et un corps d'étranglement (2), qui est supporté sur le corps de soupape, consiste en un matériau élastique et est réalisé essentiellement comme cylindre creux fendu, la fente (3) étant agencée de façon à s'étendre en direction axiale, et en ce que le corps d'étranglement (2) est surdimensionné par rapport à un siège de soupape (7) recevant le corps d'étranglement (2), **caractérisée en ce que** le corps d'étranglement (2) est compressible par le siège de soupape (7) de façon à ce que, dans l'état inséré, la fente (3) du corps d'étranglement (2) est complètement ou quasi complètement fermée, de sorte qu'un perçage transversal, à travers lequel passe un débit volumétrique, est complètement ou seulement partiellement fermé.

2. Soupape à coulisse selon la revendication 1, **caractérisée en ce que** le siège de soupape (7) est pourvu d'un chanfrein (8) sur son côté orienté vers le corps de soupape (1).

3. Soupape à coulisse selon la revendication 1, **caractérisée en ce que** le corps d'étranglement (2) est maintenu sur le corps de soupape (1) par l'intermédiaire d'un assemblage à encliquetage.

4. Soupape à coulisse selon la revendication 1, **caractérisée en ce que** le corps de soupape (1) a un embout (5) tronconique sur son extrémité orientée vers le corps d'étranglement (2).

5. Soupape à coulisse selon la revendication 4, **caractérisée en ce que** l'embout tronconique (5) est pourvu d'une contre-dépouille (6).

6. Soupape à coulisse selon la revendication 5, **caractérisée en ce que**, sur son extrémité orientée vers le corps de soupape (1), le corps d'étranglement (2) est pourvu d'un bourrelet annulaire (4) orienté vers l'intérieur qui vient s'engager dans la contre-dépouille (6).

7. Soupape à coulisse selon la revendication 6, **caractérisée en ce que** la fente (3) dans le corps d'étranglement (2) s'étend également à travers le bourrelet annulaire (4).
